## Europäisches Patentamt
## European Patent Office
## Office européen des brevets

(19)

(11) Numéro de publication: **0 151 060**
**B1**

(12) # FASCICULE DE BREVET EUROPÉEN

(45) Date de publication du fascicule du brevet:
**02.09.87**

(51) Int. Cl.⁴: **G 01 V 1/147,** G 01 V 1/40, G 01 V 1/053

(21) Numéro de dépôt: **85400078.3**

(22) Date de dépôt: **17.01.85**

(54) **Dispositif pour engendrer des impulsions acoustiques à l'intérieur d'un puits, par percussion.**

(30) Priorité: **23.01.84 FR 8401094**

(43) Date de publication de la demande:
**07.08.85 Bulletin 85/32**

(45) Mention de la délivrance du brevet:
**02.09.87 Bulletin 87/36**

(84) Etats contractants désignés:
**DE GB IT NL**

(56) Documents cité:
**FR-A-2 272 455**
**FR-A-2 436 403**
**FR-A-2 442 455**
**US-A-3 209 854**
**US-A-3 990 297**
**US-A-4 394 754**

(73) Titulaire: **INSTITUT FRANCAIS DU PETROLE, 4, Avenue de Bois- Préau, F-92502 Rueil- Malmaison (FR)**

(72) Inventeur: **Dedole, Pascal, 12, boulevard Léon Louesse, F-92500 Rueil- Malmaison (FR)**
Inventeur: **Grolet, Pierre, 19, rue de la Paix, F-78910 Orgerus (FR)**
Inventeur: **Laurent, Jean, 5, rue du Moulle Morainvilliers, F-78630 Orgeval (FR)**

## Description

La présente invention a pour objet un dispositif pour engendrer des impulsions acoustiques par percussion à l'intérieur d'un puits ou d'une cavité et plus particulièrement un dispositif d'émission adapté à être descendu à une certaine profondeur dans un puits foré dans le sol, pour engendrer des impulsions acoustiques pouvant être utilisées dans le but d'effectuer des opérations de prospection sismique par exemple.

Une source d'impulsions pour puits présente un certain nombre d'avantages. On peut, en utilisant une telle source, effectuer des opérations de prospection sismique de puits à puits qui permettent d'obtenir un pouvoir de résolution élevé ou encore restituer rapidement des profils sismiques obliques en captant les ondes émises au moyen d'une pluralité de récepteurs disposés en surface.

Elle est en outre plus efficace qu'une source disposée à la surface. Une partie notable de l'énergie acoustique produite par celle-ci est en effet émise sous la forme d'ondes de surface ou d'ondes de Rayleigh inexploitables et la partie de cette énergie qui est émise sous la forme d'ondes de type P ou S, est atténuée considérablement par la couche superficielle ou couche altérée (W. Z). Le rendement énergétique en onde P ou S d'une source de puits émettant sous la couche altérée est de ce fait beaucoup plus élevée.

Parmi les sources de puits d'un type connu, on peut citer celles qui utilisent des explosifs solides ou des mélanges gazeux explosifs. De telles sources produisent des impulsions sismiques très puissantes mais le spectre de fréquence de ces impulsions comporte une partie notable de fréquences élevées sans intérêt pratique dans le domaine de la prospection sismique. La puissance des explosions a généralement pour effet d'endommager le puits ou d'altérer les régions avoisinantes, si bien que la répétition ultérieure des tirs sismiques aux mêmes emplacements est difficile. Des sources à explosifs sont décrites par exemple dans les brevets US 3 405 622, 3 855 167.

On peut également citer les sources du type canon à air où des impulsions sismiques sont engendrées par de brusques décharges de gaz à l'intérieur du puits rempli d'eau. De telles sources produisent des ondes acoustiques puissantes mais nécessitent pour leur fonctionnement l'utilisation d'un compresseur ou de réservoirs de fluide comprimé qui, du fait de l'exiguité du trou foré, doivent être installés en surface et reliés à la source par des tuyauteries. Une telle source est décrite par exemple dans le brevet français 2 311 322.

Un dispositif connu pour engendrer à l'intérieur d'un forage des impulsions acoustiques par percussion comporte un corps cylindrique pourvu de pointes d'ancrage mues par un système hydraulique. Les moyens pour produire des chocs sont constitués de deux masses associées à des bobinages qui se déplacent l'une par rapport à l'autre et viennent s'entrechoquer sous l'action des forces électromagnétiques engendrées dans les bobinages par des courants électriques de commande. Un tel dispositif, qui est décrit dans le brevet français 2 442 455, convient pour la production d'impulsions sismiques transversales relativement faibles et de ce fait n'est pas approprié pour réaliser des opérations de prospection sismique où la profondeur des terrains à explorer est généralement très importante.

Le dispositif selon l'invention comporte un corps rigide allongé de section inférieure à celle du puits et relié par un câble à une installation de surface, le corps rigide comportant deux chambres coaxiales isolées l'une de l'autre par une paroi intermédiaire fixe, une première des deux chambres comportant une ouverture à son extrémité opposée à la paroi intermédiaire, une masse mobile adaptée à coulisser de manière étanche à l'intérieur de la première chambre entre une première position vers l'extrémité ouverte de celle-ci et une second position vers l'extrémité opposée, la masse mobile étant solidaire d'un clapet adapté à se déplacer dans la seconde chambre et à venir s'appuyer contre un siège ménagé dans la pièce intermédiaire, dans la première position de la masse mobile, un piston adapté à coulisser de manière étanche à l'intérieur de la seconde chambre du coté du clapet opposé à la pièce intermédiaire et dont la course est supérieure à celle de la masse mobile entre sa première et sa seconde positions.

Le dispositif se caractérise en ce qu'il comporte une cavité isolée du milieu extérieur au corps rigide et communiquant avec la première chambre par l'ouverture de celle-ci, cette cavité comportant des moyens élastiques pour exercer sur la masse mobile une force motrice indépendante de la pression statique régnant dans le puits, et des moyens d'immobilisation du corps dans le puits comportant au moins un patin longitudinal déplaçable entre une position rétractée le long du corps et une position écartée de couplage avec la paroi du puits, sous l'action d'au moins un vérin, et un système hydraulique pour commander à la fois le déplacement de la masse mobile vers sa première position, son maintien intermittent dans sa première position, et le fonctionnement du vérin.

Du fait de la structure allongée du corps et de son agencement, on peut disposer d'une cavité suffisamment grande pour y loger des moyens élastiques adaptés à appliquer une grande force motrice à la masse mobile et l'on peut donner à celle-ci un volume et une course importants, de manière à obtenir une grande énergie cinétique et par conséquent obtenir aux moments des impacts des impulsions sismiques très puissantes.

D'autres caractéristiques et avantages du dispositif apparaitront à la lecture de la description ci-après de modes de réalisation non limitatifs, en se référant aux dessins annexés sur lesquels:

- la figure 1 représente une vue de coupe transversale du corps du dispositif maintenu en position centrale dans l'axe d'un puits par trois patins d'ancrage en position d'extension;

- la figure 2 représente une vue partielle schématique en coupe longitudinale du dispositif, en position d'ancrage, un seul des patins d'ancrage étant représenté, et la masse mobile ayant été déclenchée et étant revenue à sa seconde position percuter une paroi solidaire du corps;

- la figure 3 représente schématiquement la partie du système hydraulique de manoeuvre disposé à l'intérieur d'un compartiment du corps, durant la phase de déclenchement du dispositif représentée à la figure 2;

- la figure 4 montre une vue partielle schématique en coupe longitudinale du dispositif en position de repos, un seul patin d'ancrage étant représenté en position retractée;

- la figure 5 représente schématiquement le système hydraulique de manoeuvre dans son compartiment en position de repos du dispositif;

- la figure 6 représente une vue partielle schématique en coupe longitudinale du dispositif au cours de la phase d'armement, la masse mobile utilisée comme masse de frappe ayant été amenée dans sa première position (position d'écartement par rapport à l'élément-cible), par coulissement du piston;

- la figure 7 représente une vue partielle agrandie du clapet permettant un blocage temporaire de la masse mobile en position d'armement;

- la figure 8 représente schématiquement le système hydraulique de manoeuvre durant la phase d'armement;

- la figure 9 représente une vue partielle schématique en coupe longitudinale du dispositif, à la fin de la phase d'armement où, la masse mobile étant maintenue dans sa première position (position d'écartement) par blocage du clapet, le piston est ramené vers sa position de repos;

- la figure 10 représente schématiquement le système hydraulique de manoeuvre durant la phase de blocage du clapet et de retour du piston de manoeuvre à sa position de repos;

- la figure 11 représente schématiquement un premier exemple de réalisation des moyens pour appliquer à la masse mobile une force motrice permettant de le précipiter vers l'élément-cible; et

- la figure 12 représente schématiquement un second exemple de réalisation des moyens d'application à la masse mobile d'une force motrice.

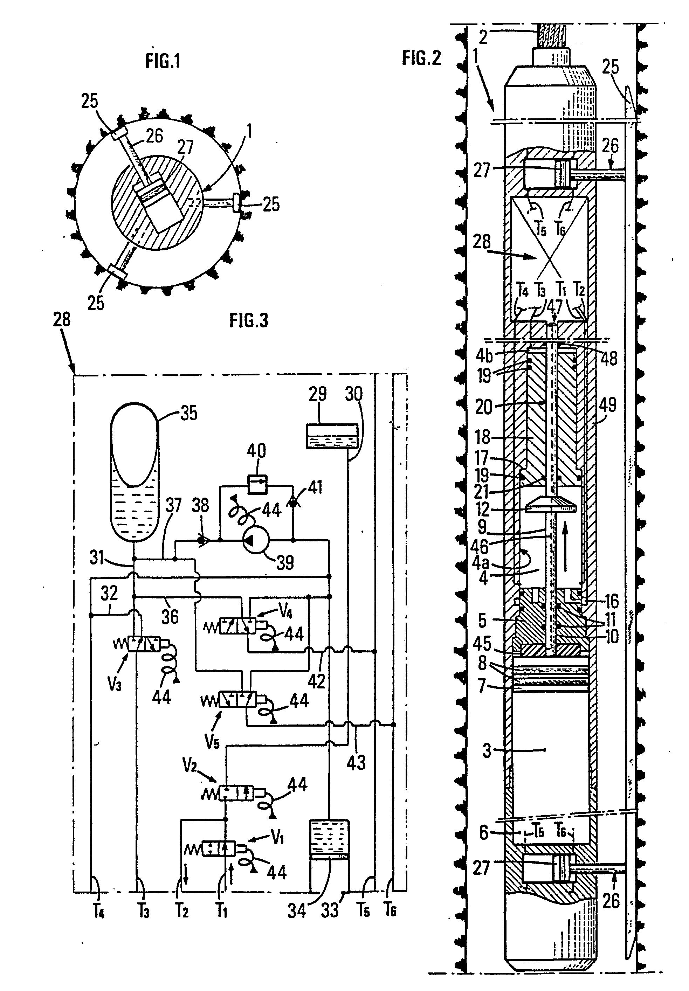

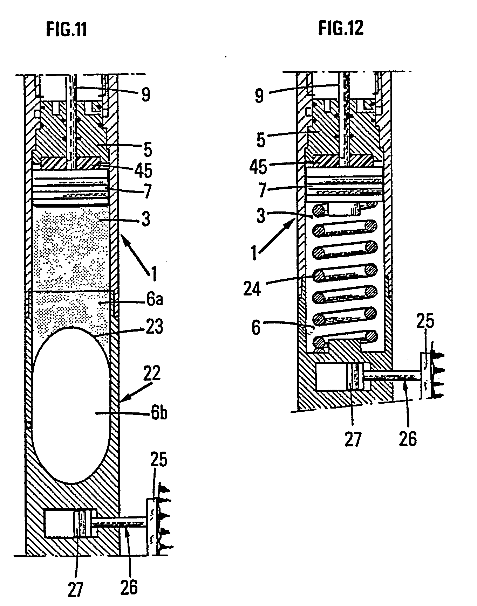

Si l'on se reporte aux figures 1 à 10, on voit que le dispositif selon l'invention comporte un corps rigide allongé creux l'adapté à être descendu, depuis la surface du sol, dans un puits foré ou une cavité souterraine, à l'extrémité inférieure d'un câble de support 2 comportant des câbles d'alimentation électrique et de transmission de signaux. Le corps rigide comporte deux chambres 3, 4 coaxiales isolées l'une de l'autre par une pièce de séparation 5 rapportée, fixée à la paroi 49 du corps et dont la face en regard de la chambre 3 est utilisée comme paroi d'impact. La chambre 3 communique avec une cavité 6 close contenant les moyens d'application de la force motrice (représentés aux figures 11 et 12).

Une masse mobile 7, pourvue à sa périphérie de joints d'étanchéité 8, est adaptée à coulisser dans la première chambre 3. Une tige 9, de longueur supérieure à celle des deux chambres 3, 4 est disposée dans l'axe du corps et traverse la pièce de séparation 5 par une ouverture 10 ménagée dans celle-ci. Des joints d'étanchéité 11 sont disposés dans l'ouverture 10 autour de la tige 9, pour isoler de façon étanche les deux chambres 3, 4 l'une par rapport à l'autre. A l'extrémité de la seconde chambre 4 opposée à la pièce de séparation 5 la tige 9 coulisse dans un alésage central 47 du corps 1. Des joints d'étanchéité 48 sont disposés dans cet alésage pour rendre étanche le coulissement de la tige et isoler de la chambre 4 la partie dudit alésage au-dessus de l'extrémité de la tige. La tige 9 est pourvue d'un canal central 46 faisant communiquer la partie de la chambre 3 entre la masse mobile 7 et la pièce de séparation 5, avec l'alésage central 47, lequel communique avec une cavité du corps contenant de l'air à la pression atmosphérique, comme il sera précisé ultérieurement.

La tige 9 est fixée dans la première chambre 3 à la masse mobile 7 et dans la seconde chambre 4 à un clapet 12. Lorsque le clapet est en contact avec la pièce de séparation 5, la masse mobile 7 se trouve dans sa première position ou position d'écartement.

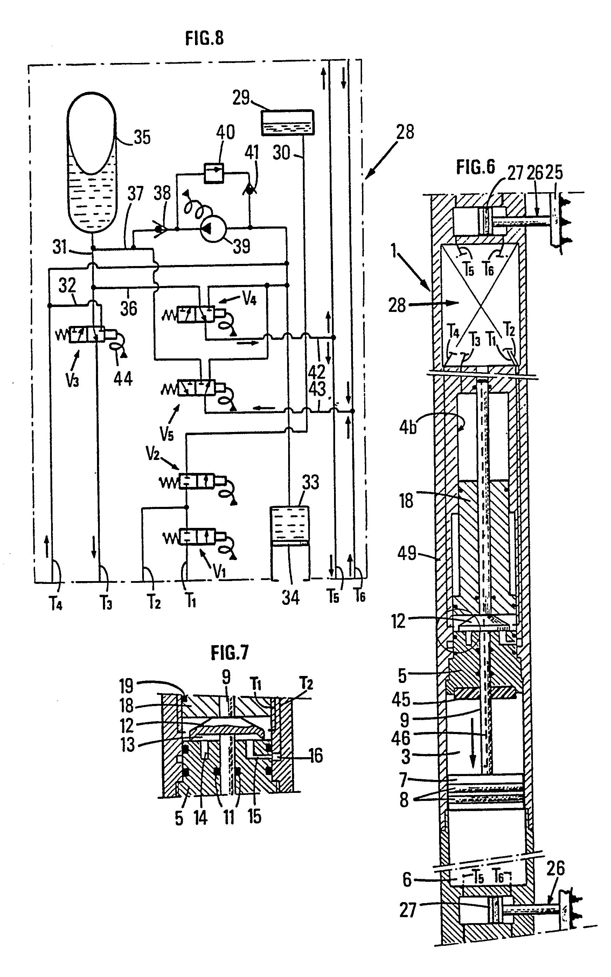

Un évidement 13 (Fig. 7) est ménagé dans la face du clapet 12 en regard de la pièce de séparation 5, et une cavité annulaire 14 de diamètre inférieur à celui du clapet 12, est ménagée dans ladite pièce 5. Un conduit radial 15 la fait communiquer avec une rainure 16 de la paroi intérieure du corps. La face de la pièce de séparation 5 constitue un siège pour le clapet 12.

La seconde chambre 4 comporte une première partie 4a dans laquelle se déplace le clapet 12 et une seconde partie 4b de section inférieure à celle de la première.

Ces deux parties sont séparées par un épaulement 17 de la paroi. La course et la section du clapet 12 sont respectivement inférieures à la longueur et la section de cette première partie de chambre 4a.

Un piston de manoeuvre 18 comportant deux parties de sections respectivement égales aux sections intérieures des deux parties 4a et 4b de la seconde chambre et pourvu à sa périphérie de joints annulaires 19, est adapté à coulisser de manière étanche dans cette seconde chambre 4 entre une position de repos ou de retrait où il est enfoncé dans la seconde partie 4b de la seconde chambre (Fig. 2 par exemple) et une position avancée (Fig. 6 par exemple) où il est en contact avec le clapet 12 lorsque celui-ci repose sur son siège contre la pièce de séparation 5. La course du piston de manoeuvre 18 est supérieure à celle de la masse mobile 7 et du clapet 12 de manière que, lorsqu'il se trouve dans sa position de repos ou de retrait, ladite masse puisse venir librement jusqu'à sa seconde position ou position de rapprochement au contact de la paroi de frappe de la pièce de séparation 5.

Le piston de manoeuvre 18 comporte un alésage central 20 et des joints circulaires 21, permettant le coulissement étanche de la tige 9 associée à la masse mobile 7.

Suivant un premier mode de réalisation représenté à la figure 11, les moyens d'application d'une force motrice à la masse mobile 7, sont constitués d'un accumulateur oléo-pneumatique 22 d'un type connu disposé dans la cavité 6 laquelle est constituée alors de deux chambres 6a, 6b séparées par une paroi déformable 23. La chambre 6a communique avec la chambre 3 et contient un liquide dont la pression s'exerce sur la masse mobile 7, l'autre 6b contient un gaz sous pression. La pression du gaz à l'intérieur de l'accumulateur 22 peut être modifiée à volonté avant que le dispositif ne soit descendu dans le puits, de manière à faire varier la force motrice qui sera appliquée à la masse mobile.

Suivant un second mode de réalisation représenté à la figure 12, les cavités 3 et 6 communiquent directement l'une avec l'autre et les moyens d'application d'une force motrice à la masse mobile 7 comportent un ressort 24 s'appuyant à une première extrémité contre ladite masse mobile et, à son extrémité opposée, contre le fond de la cavité 6.

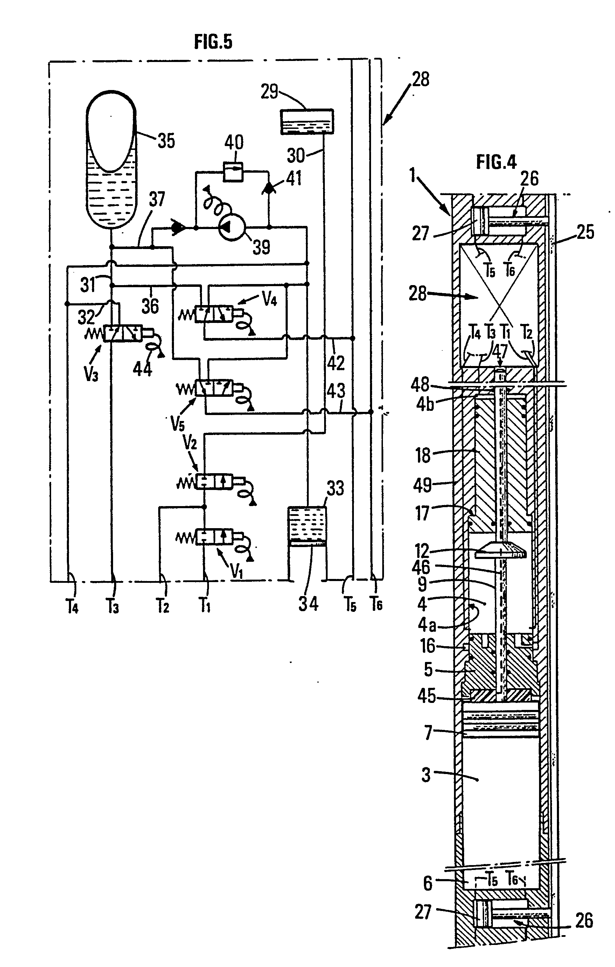

Le dispositif comporte de préférence (Figs. 1 et 2) trois patins longitudinaux 25 disposés sur le pourtour du corps 1 du dispositif, à 120° les une par rapport aux autres. Chaque patin est fixé aux tiges de deux vérins 26 disposés radialement à l'intérieur du corps 1 dans les parties terminales opposées de celui-ci, et peut être déplacé d'une position de retrait au contact du corps (Fig. 4) à une position de couplage avec la paroi du puits (Fig. 2 par exemple), par action sur la paire de vérins 26 associés.

Le système hydraulique permettant de commander le déplacement de la masse mobile 7 vers sa première position (position d'armement), de la maintenir par intermittence jusqu'à l'instant de son déclenchement et de commander les vérins associés aux différents patins, est disposé dans un compartiment 25 du corps.

Ce système comporte tout d'abord (Fig. 2 par exemple) un groupe de quatre canalisations T1, T2, T3, T4 parallèles à l'axe du corps 1, qui sont ménagées dans la paroi extérieure de celui-ci. Les canalisations T1, T2 débouchent à une première extrémité respectivement au voisinage de la base de la seconde chambre 4 (dans sa partie 4a) et dans la rainure circulaire 16 de la paroi du corps 1. Les canalisations T3, T4 débouchent à une première extrémité respectivement au voisinage des deux extrémités opposées de la seconde chambre 4. Il comporte également une canalisation T5 interconnectant en parallèle les extrémités des cavités cylindriques des six vérins, d'un même côté des pistons 27 desdits vérins et une canalisation T6 interconnectant en parallèle les parties opposées de ces mêmes cavités, entre les pistons 27 et les patins 25.

Les canalisations T1 à T6 aboutissent au compartiment 28 où elles sont raccordées à des moyens moteurs représentés en détail aux figures 3, 5, 8, 10.

La canalisation T2 est connectée à son autre extrémité, à une voie de deux électro-vannes V1, V2 à deux voies fermées en position de repos, les deux autres voies de celles-ci étant connectées respectivement à la canalisation T1 et à un réservoir 29 contenant un gaz à une pression très inférieure à la pression régnant à l'extérieur du corps, dans les conditions normales d'utilisation du dispositif, de l'air à la pression atmosphérique par exemple, au moyen d'une canalisation 30.

La canalisation T3 communique avec une voie d'une électro-vanne V3 à trois voies, les deux autres voies étant respectivement connectées, l'une à une canalisation 31, l'autre à une canalisation 32 débouchant dans la canalisation T4. Celle-ci est reliée à une extrémité d'un cylindre de compensation de la pression statique 33, communiquant à son extrémité opposée avec l'extérieur du corps 1, et dans lequel un piston 34 coulisse librement. De cette manière le fluide hydraulique dans la canalisation T4 et par conséquent à la base de la chambre 4, est maintenu à une pression égale à la pression hydrostatique extérieure. Un accumulateur oléo-pneumatique 35 d'un type connu alimente en huile sous pression la canalisation 31 et deux canalisations 36, 37 reliées respectivement à une voie de deux électro-vannes à trois voies V4, V5. L'accumulateur 35 est chargé à une pression supérieure à la pression extérieure au corps 1 par l'intermédiaire d'une valve anti-retour 38, au moyen d'une pompe hydraulique 39 mue par un moteur électrique (non représenté) et dont l'entrée est connectée à la canalisation T4. Un élément de circuit comportant une soupape 40 tarée à une pression déterminée et une valve anti-retour 41, est disposé en dérivation sur la pompe 39 pour limiter la surpression engendrée par celle-ci en fonctionnement.

Une seconde voie de chacune des deux électro-vannes V4, V5 est connectée à la canalisation T4. Leurs troisièmes voies respectives sont connectées par des canalisations 42, 43 respectivement avec les canalisations T5 et T6 d'alimentation des vérins 26.

Les électro-vannes et le moteur électrique de la pompe hydraulique 39 sont reliés électriquement par des conducteurs 44 se raccordant à des conducteurs du câble multi-fonctions 2, à un ensemble de commande installé en surface et non représenté.

En état de repos, en l'absence d'alimentation électrique, les électrovannes sont dans les positions représentées à la figure 5, ces positions étant telles que les canalisations T1 et T2 sont isolées l'une de l'autre, les canalisations T3 et T4 sont toutes les deux à la pression hydrostatique et les canalisations T5 et T6 sont respectivement à la même pression que celle régnant dans le puits et à la pression de l'accumulateur 35.

Le dispositif fonctionne de la manière suivante:

- Les électro-vannes étant en position de repos (Fig. 5), la canalisation T6 est à la pression de l'accumulateur oléo-pneumatique 35, ce qui maintient les patins 25 en position de retrait au contact du corps 1 (Fig. 4), et une même pression s'exerce de part et d'autre du piston de manoeuvre 18. La surface de celui-ci étant plus grande du côté de la partie 4a de la chambre 4 qui du côté opposé, la force résultant de l'application sur ses faces opposées de cette pression, a pour effet de le maintenir en position haute (position d'enfoncement). En outre, la force motrice appliquée sur la masse mobile 7 du côté de la cavité 6, a pour effet de la maintenir dans sa seconde position au contact de la paroi d'impact de la pièce de séparation 5. La pression qui est établie dans les compartiments 28 et 29 est par exemple celle de l'air à la pression atmosphérique.

- Le dispositif est descendu depuis la surface jusqu'à une position choisie ou amené à cette position depuis une position précédente et ancré dans le puits. A cette fin (Fig. 8), les électro-vannes V4 et V5 sont simultanément actionnées, de manière à mettre les canalisations T5 et T6 respectivement en communication avec l'accumulateur oléo-pneumatique 35 et avec le cylindre d'équilibrage statique 33 où régne une pression plus faible, et les pistons 27 des vérins 26, sous l'action de la différence de pression, poussent les patins 25 vers leurs positions d'écartement en contact avec les parois du puits. Ensuite, on actionne l'électro-vanne V3 de manière à mettre la canalisation T3 en communication avec la canalisation 31. Le liquide sous pression de cette canalisation est appliqué du côté de la partie 4b de la chambre 4 sur le piston de manoeuvre 18 qui se déplace vers le bas et vient s'appliquer contre le clapet 12 en l'entrainant dans sa translation jusqu'à ce qu'il vienne s'appliquer contre la pièce de séparation 5 (Fig. 6) et que l'évidement 13 dudit clapet (Fig. 7) soit isolé du reste de la seconde chambre 4. La masse mobile 7 occupe alors sa position basse (première position).

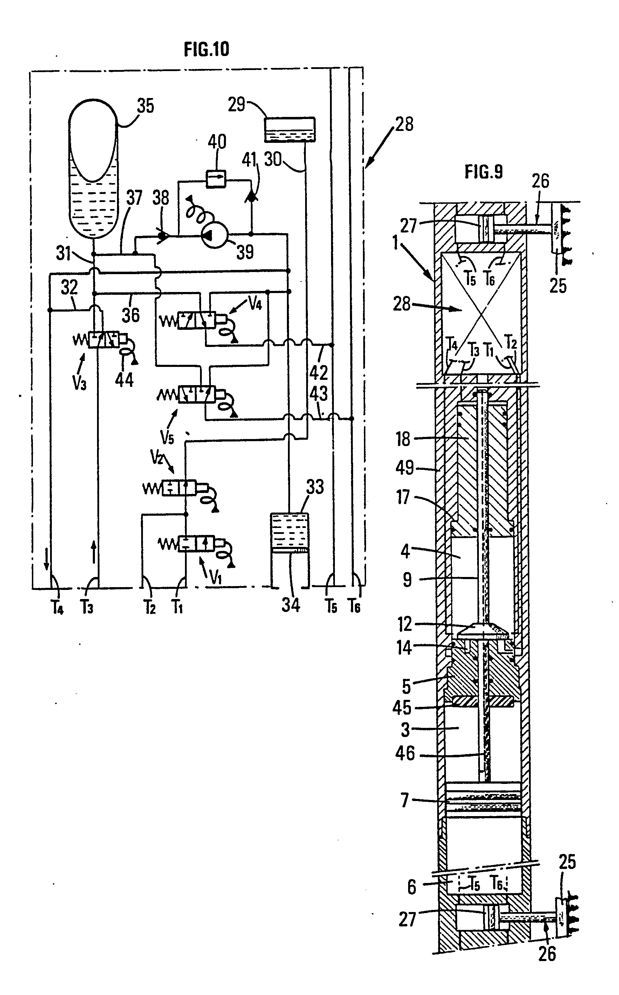

- On commande ensuite (Fig. 9, 10) l'ouverture de l'électro-vanne V2, et la mise en communication de l'évidement 13 du clapet 12 avec le réservoir à la pression atmosphérique 29, par l'intermédiaire de l'évidement annulaire 14 dans la pièce de séparation 5 et des canalisations T2 et 30. La section du clapet 12 est choisie pour que la différence de pression entre la pression extérieure et la pression atmosphérique s'exerçant de part et d'autre, soit suffisante pour le maintenir au contact de l'élément de séparation, en l'absence de toute poussée de la part du piston de manoeuvre 18. On commande alors la remontée du piston 7 en actionnant l'électro-vanne V3, de manière à faire communiquer entre elles les canalisations T3 et T4. Les deux faces opposées dudit piston se retrouvant à la même pression et étant de surfaces inégales, celui-ci retourne à sa position d'enfoncement (position haute).

- Le cycle s'achève par le déclenchement du dispositif. A cet effet, on ferme l'électro-vanne V2 et on ouvre l'électro-vanne V1 (Fig. 3), de manière à égaliser les pressions de part et d'autre du clapet 12, ce qui supprime toute force de retenue. La masse mobile 7 propulsée par les moyens moteurs contenus dans la cavité 6 (Figs. 11, 12), revient brusquement vers sa position de repos (Fig. 2) où elle vient percuter la paroi d'impact de la pièce de séparation 5. Sous le choc, des impulsions sismiques sont émises et sont transmises aux parois du puits par l'intermédiaire des patins d'ancrage 25.

Un disque 45 réalisé en un matériau déformable pourra être fixé sur la paroi d'impact de la pièce de séparation 5 pour éviter la détérioration de celle-ci sous l'effet des chocs répétés.

On ne sortirait pas du cadre de l'invention en n'utilisant qu'un seul patin d'ancrage, le corps étant alors décentré et en contact direct avec la paroi du puits ou en remplaçant chaque patin par deux patins distincts disposés aux niveaux des parties terminales du corps et actionnés séparément par des moyens moteurs.

**Revendications**

1. Dispositif pour engendrer des ondes acoustiques au moyen d'un système hydralique dans un puits ou une cavité, par percussion d'une masse contre un élément-cible couplé mécaniquement avec la paroi du puits ou de la cavité, comportant un corps rigide allongé (1) de section inférieure à celle du puits et relié par un câble (2) à une installation de surface, le corps rigide comportant deux chambres coaxiales (3, 4) isolées l'une de l'autre par une pièce intermédiaire fixe (5), une première des deux chambres (3) comportant une ouverture à son extrémité opposée à la pièce intermédiaire, une masse mobile (7) adaptée à coulisser de manière étanche à l'intérieur de la première chambre entre une première position vers l'extrémité ouverte de celle-ci et une seconde position au contact de ladite pièce intermédiaire (5), la masse mobile étant solidaire d'un clapet (12) adapté à se déplacer dans la seconde chambre et à venir s'appuyer contre un siège ménagé sur la pièce intermédiaire, dans la première position de la masse mobile, un piston de manoeuvre (18) adapté à coulisser de manière étanche à l'intérieur de la seconde chambre, du côté du clapet opposé à la pièce intermédiaire et dont la course est supérieure à celle de la masse mobile entre sa première et sa seconde positions, caractérisé en ce qu'il comporte une cavité (6) isolée du milieu extérieur au corps rigide et communiquant avec la première chambre par ladite ouverture, cette cavité comportant des moyens (22, 24) pour exercer sur la masse mobile une force motrice indépendante de la pression statique régnant dans le puits, et des moyens d'immobilisation du corps dans le puits comportant au moins un patin longitudinal (25) déplaçable entre une position rétractée le long du corps et une position écartée de couplage avec la paroi du puits, sous l'action d'au moins un vérin (26) et un système hydraulique pour commander à la fois le déplacement de la masse mobile vers sa première position, son maintien intermittent dans sa première position, et le fonctionnement dudit vérin.

2. Dispositif selon la revendication 1, caractérisé en ce que le clapet (12) comporte un évidement intérieur (13), la seconde chambre comporte deux parties (4a, 4b) de sections inégales, le piston de manoeuvre (18) comporte deux parties de sections différentes adaptées respectivement aux sections des deux parties de la seconde chambre (4), l'extrémité du piston de section la plus grande étant adaptée à venir en appui sur le clapet et à l'entrainer en translation, et en ce que le système hydraulique comporte une source de pression, des canalisations (T3, T4) associées à des premiers moyens de commutation (V3), pour mettre l'extrémité de la partie de la seconde chambre ayant la plus faible section, en communication soit avec la source de pression, soit avec la partie opposée de la même chambre, des canalisations (T1, T2) associées à des seconds moyens de commutation (V1, V2) pour mettre l'évidement intérieur du clapet (12) en communication avec l'intérieur de la seconde chambre (4) ou avec un réservoir (29) contenant un fluide à une pression très inférieure à celle régnant dans la seconde chambre, lorsque le clapet est en appui sur son siège, et des canalisations (T5, T6) associées à des troisièmes moyens de commutation (V4, V5), pour mettre chacune des parties terminales opposées du corps dudit vérin, en communication par intermittence avec ladite source de pression.

3. Dispositif selon la revendication 2, caractérisé en ce que les moyens de pression comportent au moins une pompe hydraulique (39) adaptée à comprimer le flude de dont la pression on est maintenue en équilibre avec la pression régnant à l'extérieur du corps au moyen d'un circuit d'équilibrage de pression comportant un cylindre d'équilibrage (33) communiquant à une de ses extrémités avec l'extérieur du corps, dans lequel se déplace un piston libre (34).

4. Dispositif selon la revendication 3, caractérisé en ce que les premiers et les troisièmes moyens de commutation sont constitués d'électro-vannes (V3, V4, V5) connectées hydrauliquement en parallèle entre la sortie de la pompe hydraulique (39) et le circuit d'équilibrage de pression (33, 34), et en ce que les seconds moyens de commutation sont constitués de deux électro-vannes (V1, V2) interconnectées en série le circuit qui les relie étant connecté avec l'évidement (13) intérieur du clapet et intercalées sur un circuit reliant ledit réservoir (29) et ladite seconde chambre (4).

5. Dispositif selon la revendication 3, caractérisé en ce que la pompe hydraulique (39) est couplée avec un accumulateur oléo-pneumatique (35).

6. Dispositif selon la revendication 1, caractérisé en ce qu'il comporte trois patins longitudinaux disposés à 120° les une par rapport aux autres, chacun d'eux étant déplaçable au moyen de deux vérins (26) disposés radialement dans les parties terminales du corps, l'ensemble des vérins étant connectés en parallèle par les canalisations (T5, T6) reliées aux troisièmes moyens de commutation (V4, V5).

7. Dispositif selon la revendication 1, caractérisé en ce que les moyens pour exercer une force motrice sur la masse mobile comportent un accumulateur oléo-pneumatique (22).

8. Dispositif selon la revendication 1, caractérisé en ce que les moyens pour exercer une force motrice sur la masse mobile comportent un ressort (24) comprimé à l'intérieur de la cavité (6) par le recul de la masse mobile (7) vers sa première position.

9. Dispositif selon la revendication 1, caractérisé en ce qu'une couche (45) d'un matériau déformable est fixée sur la pièce intermédiaire (5) pour amortir les chocs contre celle-ci de la masse mobile en position de rapprochement.

**Patentansprüche**

1. Vorrichtung zur Erzeugung von Schallwellen mittels eines hydraulischen Systems in einem Bohrloch oder einem Hohlraum, durch Perkussion einer Masse gegen ein Targetelement, welches mechanisch mit der Wandung des Bohrlochs oder des Hohlraums gekoppelt ist, mit einem länglichen steifen Gehäuse (1) von einem Querschnitt, der kleiner als der des Bohrlochs ist und das über ein Kabel oder Seil (2) mit einer Oberflächeninstallation verbunden ist, wobei das steife Gehäuse zwei koaxiale voneinander durch ein festes Zwischenstück (5) getrennte koaxiale Kammern (3, 4) aufweist, wobei eine erste der beiden Kammern (3) über eine Öffnung an ihrem dem Zwischenstück gegenüberliegenden Ende verfügt und eine bewegliche Masse (7) so ausgebildet ist, daß sie dicht im Inneren der ersten Kammer zwischen einer ersten Stellung gegen deren offenes Ende und einer zweiten Stellung in Kontakt mit diesem Zwischenstück (5) gleitet, wobei die bewegliche Masse fest mit einem Klappenventil (12) verbunden ist, das von einer Auslegung ist, derart, daß es sich in der zweiten Kammer verschiebt und zur Abstützung gegen einen auf dem Zwischenstück ausgebildeten Sitz in der ersten Stellung der beweglichen Masse kommt, einem Betätigungskolben (18), der so ausgelegt ist, daß er dicht im Inneren der zweiten Kammer auf der dem Zwischenstück gegenüberliegenden Seite des Klappenventils gleitet und dessen Hub größer als der der beweglichen Masse zwischen ihrer ersten und ihrer zweiten Stellung ist, gekennzeichnet durch einen von der Umgebung außerhalb des steifen Gehäuses abgetrennten Hohlraum (6), der mit der ersten Kammer über diese Öffnung in Verbindung steht, wobei dieser Hohlraum Einrichtungen (22; 24) umfaßt, wobei auf die bewegliche Masse eine Antriebskraft ausgeübt wird, die unabhängig vom statischen im Bohrloch herrschenden Druck ist und Einrichtungen zum Unbeweglichmachen des Gehäuses im Bohrloch mit wenigstens einem Längsschuh (25), der zwischen einer längs des Gehäuses zurückgezogenen Stellung und einer ausgefahreren Kopplungsstellung mit der Wand des Bohrlochs unter der Wirkung wenigstens eines Stellzylinders (26) beweglich ist und einem hydraulischen System, welches gleichzeitig die Verschiebebewegung der beweglichen Masse gegen ihre erste Stellung, ihr intermittierendes Halten in der ersten Stellung und die Funktionsweise dieses Stellzylinders steuert.

2. Vorrichtung nach Anspruch 1, dadurch gekennzeichnet, daß das Klappenventil (12) über eine innere Ausnehmung (13) verfügt, die zweite Kammer zwei Teile (4a, 4b) ungleichen Querschnitts aufweist, der Betätigungskolben (18) zwei Teile unterschiedlicher Querschnitte umfaßt, die jeweils an die Querschnitte von zwei Teilen der zweiten Kammer (4) angepaßt sind, wobei das Ende des Kolbens mit dem größten Querschnitt so ausgelegt ist, daß es in Abstützung gegen das Klappenventil kommt und dieses in Translation mitnimmt und daß das hydraulische System eine Druckquelle sowie Leitungen (T3, T4) umfaßt, die ersten Umschalteinrichtungen (V3) zugeordnet sind, um das Ende des Teils der zweiten Kammer mit dem geringsten Querschnitt in Verbindung entweder mit der Druckquelle oder mit dem der gleichen Kammer gegenüberliegenden Teil zu setzen, Leitungen (T1, T2), die zweiten Umschalteinrichtungen (V1, V2) zugeordnet sind, um die Innenausnehmung des Klappenventils (12) in Verbindung mit dem Inneren der zweiten Kammer (4) oder mit einem Speicher (29) zu setzen, welcher ein Fluid bei einem Druck enthält, der sehr viel geringer als der in der zweiten Kammer herrschende ist, wenn das Klappenventil sich in Abstützung gegen seinen Sitz befindet und dritten Umschalteinrichtungen (V4, V5) zugeordnete Leitungen (T5, T6), die jeden der dem Gehäuse dieses Stellzylinders gegenüberliegenden Endteile in intermittierende Verbindung mit der Druckquelle setzen.

3. Vorrichtung nach Anspruch 2, dadurch gekennzeichnet, daß die Druckeinrichtungen wenigstens eine hydraulische Pumpe (39) umfassen, die so ausgelegt ist, daß sie das Fluid komprimiert, dessen Druck im Gleichgewicht mit dem außerhalb des Gehäuses herrschenden Drucks mittels eines Druckgleichgewichtskreises gehalten wird, der einen Gleichgewichts- oder Ausgleichzylinder (33) aufweist, der an einem seiner Enden mit der Außenseite des Gehäuses in Verbindung steht, in welchem sich ein freier Kolben (34) bewegt bzw. verschiebt.

4. Vorrichtung nach Anspruch 3, dadurch gekennzeichnet, daß die ersten und dritten Umschalteinrichtungen gebildet werden durch Magnetventile (V3, V4, V5), welche hydraulisch parallel zwischen den Ausgang der hydraulischen Pumpe (39) und dem Druckgleichgewichtskreis (33, 34) verbunden sind und daß die zweiten Umschalteinrichtungen gebildet werden durch zwei Magnetventile (V1, V2), die in Reihe miteinander verbunden sind und wobei der sie verbindende Kreis mit der Innenausnehmung (13) des Klappenventils verbunden ist, wobei die Zwischen schaltung in einem Kreis erfolgt, der diesen Speicher (29) und diese zweite Kammer (4) verbindet.

5. Vorrichtung nach Anspruch 3, dadurch gekennzeichnet, daß die hydraulische Pumpe (39) mit einem ölpneumatischen Sammler (35) gekoppelt ist.

6. Vorrichtung nach Anspruch 1, gekennzeichnet durch drei unter 120° bezüglich einander angeordnete Längsschuhe, von denen ein jeder mittels zweier Stellzylinder (26) bewegbar ist, welche radial in den Endteilen des Gehäuses angeordnet sind, wobei die Anordnung der Stellzylinder parallel zu den Leitungen (T5, T6) liegt, welche mit den dritten Umschalteinrichtungen (V4, V5) verbunden sind.

7. Vorrichtung nach Anspruch 1, dadurch gekennzeichnet, daß die Einrichtungen, die eine Antriebskraft auf die bewegliche Masse ausüben, einen ölpneumatischen Sammler (22) umfassen.

8. Vorrichtung nach Anspruch 1, dadurch gekennzeichnet, daß die Einrichtungen, die eine Antriebskraft auf die bewegliche Masse ausüben, eine Feder (24) umfassen, die im Inneren des Bohlraums (6) durch Zurückgehen der beweglichen Masse (7) in ihre erste Stellung komprimiert wird.

9. Vorrichtung nach Anspruch 1, dadurch gekennzeichnet, daß eine Schicht (45) aus einem verformbaren Material, auf dem Zwischenstück (5) fixiert ist, um die Stöße der beweglichen Masse in Annäherungsstellung hiergegen abzudämpfen.

**Claims**

1. Device for generating sound waves, by means of a hydraulic system in a well or cavity, by means of a mass striking against a target element mechanically coupled to the wall of the well or cavity, including an elongate rigid body (1) of a section less than that of the well and connected by a cable (2) to a surface installation, the rigid body having two coaxial chambers (3,4) isolated from each other by a fixed intermediate part (5), a first one of the two chambers (3) having an opening at its end opposite the intermediate part, a mobile mass (7) adapted to sealingly slide inside the first chamber between a first position towards the open end thereof and a second position in contact with said intermediate part (5), the mobile mass being secured to a valve (12) adapted for moving in the second chamber and for coming into abutment against a seat formed on the intermediate part, in the first position of the mobile mass, a control piston (18) adapted for sealingly sliding inside the second chamber, on the side of the valve opposite the intermediate part and whose stroke is greater than that of the mobile mass between its first and second positions, characterized in that it includes a cavity (6) isolated from the environment external to the rigid body and communicating with the first chamber through said opening, this cavity having means (22, 24) for exerting on the mobile mass a drive force independent of the static pressure reigning in a well, and means for immobilizing the body in the well including at least one longitudinal shoe (25) movable between a retracted position along the body and an extended position for coupling with the wall of the well, under the action of at least one cylinder (26) and a hydraulic system for controlling at one and the same time the movement of the mobile mass to its first position, its intermittent maintenance in its first position and the operation of said cylinder.

2. Device according to claim 1, characterized in that the valve (12) has an inner recess (13), the second chamber includes two parts (4a, 4b) of unequal sections, the control piston (18) includes two parts of different sections adapted respectively to the sections of the two parts of the second chamber (4), the end of the piston having the largest section being adapted to come into abutment against the valve and to drive it in translation, and in that the hydraulic system includes a pressure source, ducts (T3, T4) associated with first switching means (V3), for putting the end of the part of the second chamber having the smallest section in communication either with the pressure source, or with the opposite part of the same chamber, ducts (T1, T2) associated with a second switching means (V1, V2) for putting the inner recess of the valve (12) in communication with the inside of the second chamber (4) or with the reservoir (29) containing a fluid at a pressure much less than that reigning in the second chamber, when the valve is in abutment on its seat, and ducts (T5,T6) associated with third switching means (V4,V5), for putting each of the opposite end parts of the body of said cylinder intermittently in communication with said pressure source.

3. Device according to claim 2, characterized in that the pressure means include at least one hydraulic pump (39) adapted for compressing the fluid whose pressure is maintained balanced with the pressure reigning outside the body by means of a pressure trimming circuit including a trimming cylinder (33) communicating at one of its ends with the outside of the body, in which a free piston (34) moves.

4. Device according to claim 3, characterized in that the first and third switching means are formed of electromagnetic valves (V3, V4, V5) connected hydraulically in parallel between the output of the hydraulic pump (39) and the pressure trimming circuit (33, 34), and in that the second switching means are formed from two electromagnetic valves (V1, V2) interconnected in series, the circuit which connects them together being connected to the inner recess (13) of the valve, and inserted in a circuit connecting said reservoir (29) and said second chamber (4) together.

5. Device according to claim 3, characterized in that the hydraulic pump (39) is coupled to an oleo-pneumatic accumulator (35).

6. Device according to claim 1, characterized in that it includes three longitudinal shoes disposed at 120° from each other, each of them being movable by means of two hydraulic cylinders (26) disposed radially in the end parts of the body, the cylinder assembly being connected in parallel through ducts (T5, T6) connected to the third switching means (V4, V5).

7. Device according to claim 1, characterized in that means for exerting a drive force on the mobile mass include an oleo-pneumatic accumulator (22).

8. Device according to claim 1, characterized in that the means for exerting a drive force on the mobile mass include a spring (24) compressed inside the cavity (6) by the return of the mobile mass (7) to its first position.

9. Device according to claim 1, characterized in that a layer (45) of a deformable material is fixed to the intermediate part (5) for absorbing the shocks between it and the mobile mass in the close up position.

# FIG.1

# FIG.2

# FIG.3

**FIG.5**

35

29

30

40

41

37

39

31

32

36

$V_4$

$V_3$

44

$V_5$

$V_2$

42

43

33

$V_1$

34

28

**FIG.4**

1

26

27

25

28

$T_5$ $T_6$

$T_4$ $T_3$ $T_1$ $T_2$

47

48

4b

18

49

17

12

46

9

4

4a

16

5

45

7

3

6

$T_5$ $T_6$

27

26

$T_4$ $T_3$ $T_2$ $T_1$ $T_5$ $T_6$

**FIG.8**

**FIG.6**

**FIG.7**

0 151 060

**FIG.10**

**FIG.9**

7

## FIG.11

9
5
45
7
3
1
6a
23
22
6b
25
27 26

## FIG.12

9
5
45
7
3
1
24
6
25
27 26